Europäisches Patentamt

European Patent Office

Office européen des brevets

(19)

(11) Numéro de publication: **0 053 084**
**B1**

(12)

# FASCICULE DE BREVET EUROPEEN

(45) Date de publication du fascicule du brevet:
**24.07.85**

(51) Int. Cl.⁴: **A 61 M 1/22**

(21) Numéro de dépôt: **81420161.2**

(22) Date de dépôt: **30.10.81**

(54) Appareil, utilisable comme rein artificiel, comportant des plaques à canaux découverts.

(30) Priorité: **13.11.80 FR 8024477**

(43) Date de publication de la demande:
**02.06.82 Bulletin 82/22**

(45) Mention de la délivrance du brevet:
**24.07.85 Bulletin 85/30**

(84) Etats contractants désignés:
**BE CH DE GB IT LI NL SE**

(56) Documents cités:
**FR - A - 1 593 273**
**FR - A - 2 045 916**
**FR - A - 2 101 593**
**US - A - 3 547 271**

(73) Titulaire: **HOSPAL INDUSTRIE, 7, Avenue Lionel Terray,**
**F-69330 Meyzieu (FR)**

(72) Inventeur: **Benattar, Robert, 115, boulevard Yves Farges,**
**F-69007 Lyon (FR)**
Inventeur: **Cronenberger, Michel,**
**F-69700 Chassagny-par-Givors (FR)**

(74) Mandataire: **Vogt, Bernard et al, RHONE-POULENC**
**RECHERCHES Service Brevets Chimie et Polymères**
**Centre de Recherches de Saint-Fons B.P. 62,**
**F-69192 St-Fons Cédex (FR)**

ACTORUM AG

## Description

La présente invention concerne un appareil du type décrit dans le FR-A-2 045 916 et illustrant le préambule de la revendication 1 et utilisable pour des opérations de traitement de fluides, notamment comme rein artificiel.

Des appareils résultant de l'empilement de plaques sont connus, mais ils présentent des inconvénients notamment du fait qu'il est nécessaire dans ces appareils soit de percer les membranes avant leur montage sur les plaques ou après empilement desdites plaques et des membranes, et de prévoir des dispositifs spéciaux de genre «rondelles» pour assurer l'étanchéité aux endroits où les membranes sont percées et pour permettre le passage du fluide à ces endroits, soit de prévoir des passages pour un fluide dans des canalisations situées dans l'épaisseur de la plaque pour que ledit fluide puisse passer de l'extérieur d'une plaque jusque dans la zone de ladite plaque où se produit l'échange et/ou la séparation. Des appareils tels que ceux précédemment décrits sont ainsi difficiles à obtenir, soit du fait de la complexité des moules pour fabriquer les plaques elles-mêmes, soit du fait de la complexité de leur montage, ce qui n'en facilite pas l'automatisation. D'autre part de tels appareils, du fait de leur structure et des contraintes dues aux techniques d'injection sont en général assez volumineux, notamment par l'épaisseur des «rondelles» dont il a été question ci-avant ou du fait que les passages à l'intérieur de l'épaisseur d'une plaque nécessitent que cette plaque ait une épaisseur au moins égale à 1,2 mm.

Un but de la présente invention est donc un appareil ne présentant pas les inconvénients des appareils de l'art antérieur.

Un but de la présente invention est un appareil présentant une grande surface de membrane par unité de volume et plus particulièrement un appareil dans lequel chaque plaque, avec une surface d'échange et/ou de séparation sur chaque face, a une épaisseur généralement inférieure à 1,2 mm, de préférence inférieure à 1 mm et notamment comprise entre 0,5 et 1 mm.

Un autre but de la présente invention est un appareil dans lequel, soit il n'est pas nécessaire de percer les membranes, soit si elles sont percées elles le sont uniquement pour le passage du fluide devant circuler au contact des plaques, cela ne nécessitant pas la présence de «rondelle» d'autre part.

Un autre but de la présente invention est un appareil permettant une automatisation simple de son montage.

Un autre but de la présente invention est un appareil dans lequel les plaques, du fait de leur structure, permettent d'utiliser pour leur obtention des moules d'injection simples ne nécessitant pas notamment d'inserts mobiles latéraux, alors que ceux-ci sont nécessaires par exemple pour la réalisation de l'appareil selon FR-A-2 045 916 dans lequel des trous 80 et 95 sont prévus sur un bord de chaque plaque, parallèlement à ses faces principales, pour l'introduction et la récupération du fluide circulant au contact desdites faces.

Il a maintenant été trouvé et c'est ce qui fait l'objet de la présente invention un appareil utilisable notamment comme rein artificiel comprenant un empilement de plaques ayant chacune une zone d'échange et/ou de séparation sur chacune de leurs faces superposées de l'empilement, chaque plaque étant entourée par une membrane venant recouvrir chacune des faces superposées et se retournant sur un bord de ladite plaque, ledit bord comprenant deux groupes de canaux découverts, les canaux de chaque groupe étant situés dos à dos sur une même plaque, un groupe étant prévu pour l'introduction et l'autre pour l'évacuation d'un premier fluide circulant entre les parties de membranes se faisant face de deux plaques consécutives, caractérisé en ce que ledit empilement résulte essentiellement de l'alternance de deux types de plaques et en ce que chaque plaque comprend de plus au moins un ensemble comportant pour la circulation d'un deuxième fluide au contact des faces superposées de chaque plaque dans les zones d'échange et/ou de séparation:

— un premier trou, traversant la plaque perpendiculairement à ses faces superposées, situé à proximité de la zone d'échange et/ou de séparation de ladite plaque dans une zone dite de répartition sur chaque face superposée de la plaque,

— un premier canal découvert situé sur une face superposée de la plaque, ledit canal découvert étant relié avec ledit premier trou et avec

— un second trou, traversant la plaque perpendiculairement à ses faces superposées, relié à

— un second canal découvert disposé sur la face superposée opposée à celle où se trouve le premier canal découvert de la plaque considérée,

les trous d'une plaque coïncidant avec les trous des plaques adjacentes, tandis que les canaux découvers d'une plaque font face aux canaux correspondants des plaques adjacentes et vice versa.

La description d'un appareil selon la présente invention sera mieux comprise à l'aide des figures ci-jointes qui illustrent de façon schmématique, à titre d'exemples non limitatifs, des modes de réalisation particuliers dudit appareil.

La fig. 1 représente, en vue de dessus, une plaque A d'un appareil selon la présente invention.

La fig. 2 représente, en vue de dessus une plaque B du même appareil.

La fig. 3 représente, en perspective et partiellement une plaque A selon la fig. 1.

La fig. 4 représente, en perspective et partiellement une plaque B selon la fig. 2.

La fig. 5 représente un autre mode de réalisation d'un appareil selon la présente invention, en vue de dessus et en coupe.

La fig. 6 est une coupe partielle de l'appareil selon VI–VI de la fig. 5.

La fig. 7 est une vue de dessus, partielle, d'une plaque B de l'appareil selon la fig. 5.

La fig. 8 est une vue de dessus, partielle, d'une plaque A de l'appareil selon la fig. 5.

La fig. 9 est une vue en perspective, partielle, de la plaque A et de la plaque B de l'appareil selon la fig. 5.

La fig. 10 représente une variante de réalisation de l'appareil selon la fig. 5.

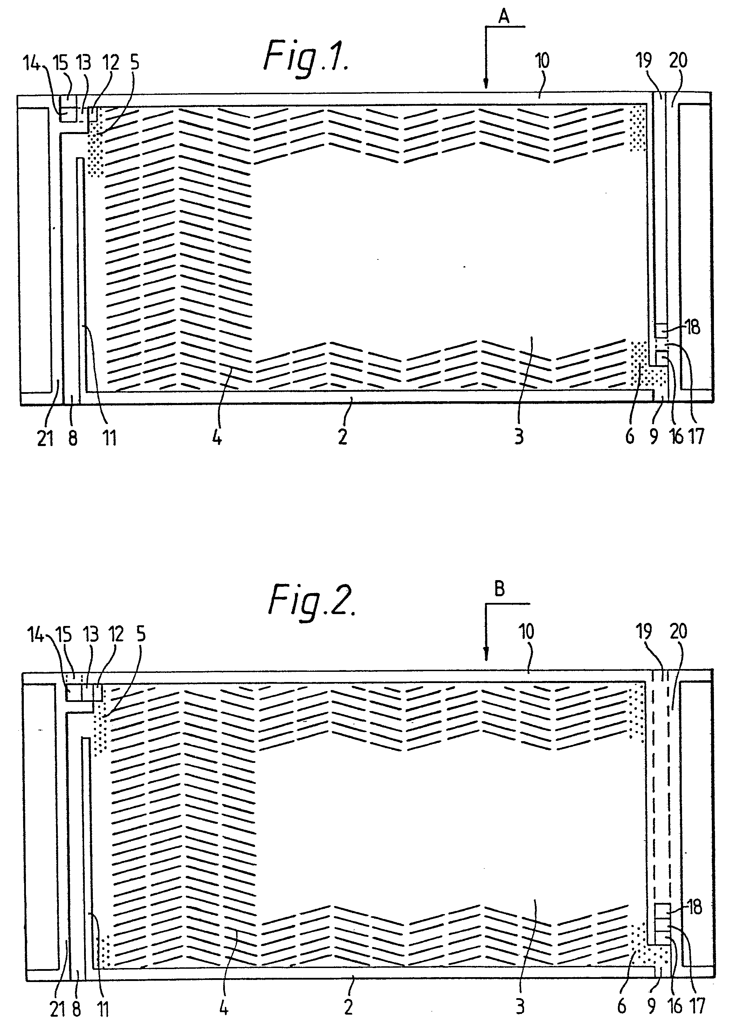

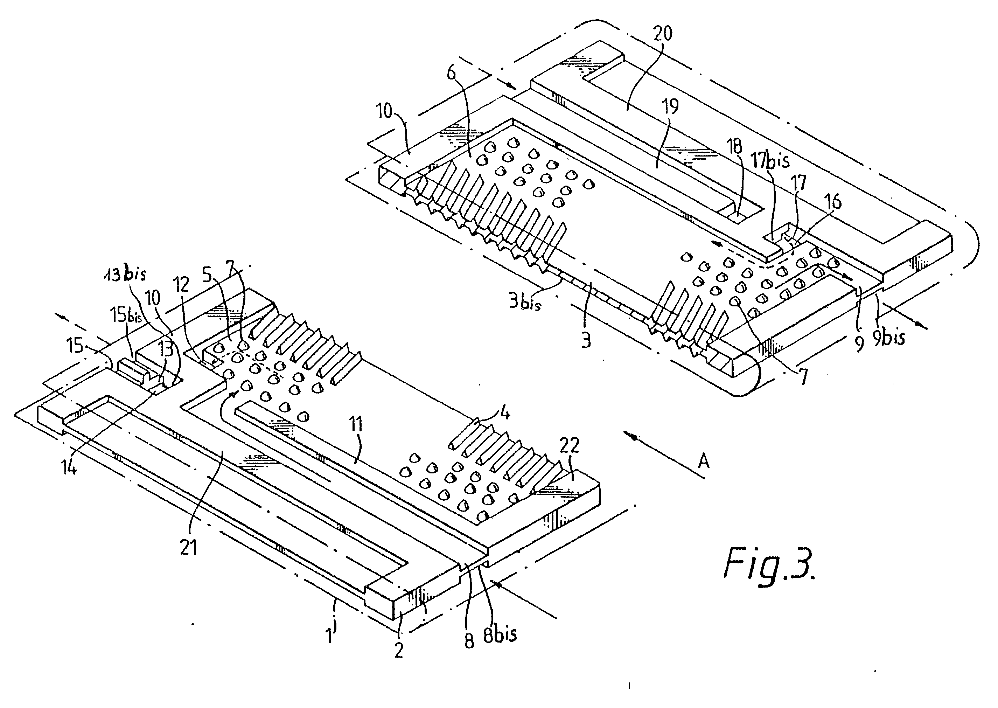

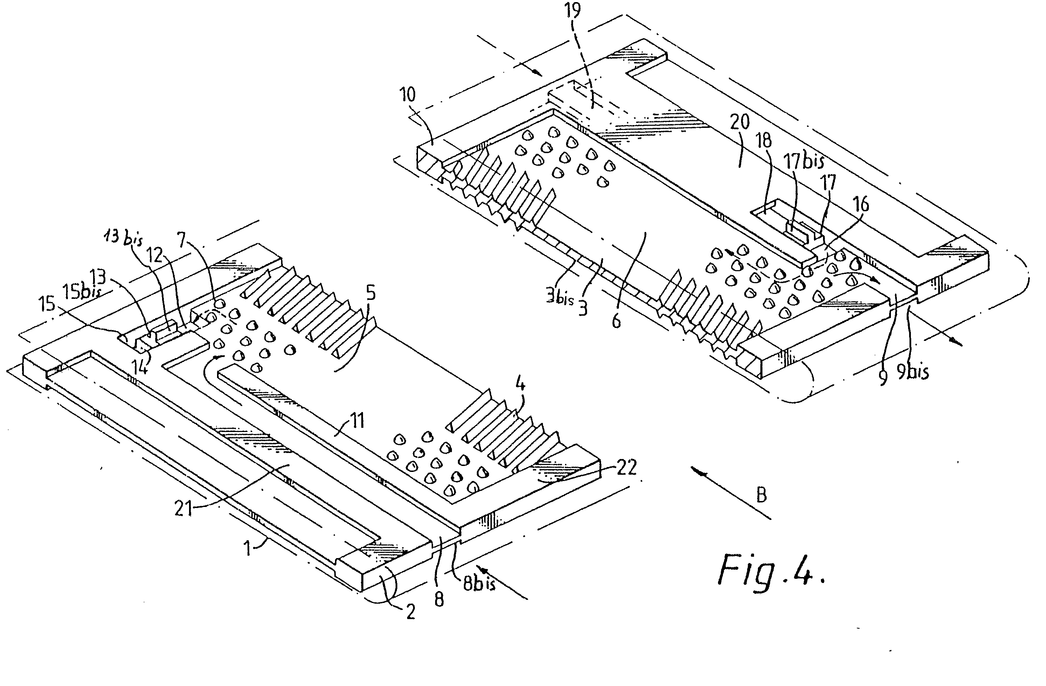

Un appareil selon la présente invention résulte par exemple de l'empilement alterné des plaques A et B représentées figs 1 à 4, comprenant chacune une membrane 1 sur chacune de leurs faces, chaque membrane 1 semi-perméable étant repliée autour d'un bord 2 desdites plaques. Il doit être signalé ici que lorsque dans la présente demande il est question de faces des plaques A ou B ou de faces superposées il est bien évident qu'il s'agit des deux faces principales de chacune desdites plaques, c'est-à-dire des faces présentant la plus grande surface. Dans les figs 3 et 4 les membranes 1 sont représentées transparentes et de façon schématique pour montrer qu'elles sont repliées autour du bord 2 de chaque plaque A et B, mais il doit être entendu que les membranes 1 plaquent contre les bords 2 dans un appareil selon la présente invention. Lors de l'empilement des plaques A et B comprenant les membranes 1, les bords 2 de chaque plaque sont superposés de façon à ce que dans l'empilement obtenu les bords 2 forment une face latérale dudit empilement. L'appareil final comporte de plus des plaques latérales et des plaques supérieure et inférieure pour assurer le serrage et le maintien de l'empilement, lesdites plaques latérales comportant de plus des moyens d'introduction et d'évacuation des fluides dont il sera question ci-après. Des appareils munis d'un tel dispositif dit de contention et distribution de fluides sont connus de l'art antérieur et ce dispositif n'étant pas l'objet de la présente invention il n'a pas été dessiné figs 1 à 4 dans un but de simplification.

Les plaques A et B représentées figs 1 à 4 peuvent être utilisées pour un appareil d'échange du type hémodialyseur et la description qui va suivre se rapportera plus particulièrement à ce type d'application dudit appareil, dans lequel le sang circule entre les membranes 1 de deux plaques A et B consécutives et dans lequel le liquide de dialyse circule entre les faces de chaque plaque et les membranes 1.

Chaque plaque A et B comprend une zone d'échange 3, 3bis sur chacune de ses faces, ces zones d'échange comprenant par exemple des barrettes 4 ou nervures [représentées seulement partiellement figs 1 et 2], dont l'angle avec l'axe longitudinal de la plaque est tel que lorsque les plaques A et B sont superposées les barrettes 4 des deux plaques se faisant face sont croisées entre elles. Chaque plaque A et B comporte en outre, vers chaque extrémité et sur chaque face, une zone 5 et 6, dite de répartition, ces zones 5 et 6 comprenant par exemple une multitude de petits points 7 en relief.

Chaque plaque A et B comprend sur chacune de ses faces, sur le bord 2 recouvert par la membrane 1 deux groupes de canaux découverts 8, 8bis et 9, 9bis situés dos à dos, chacun de ces canaux découverts débouchant sur une face d'une plaque dans la zone de répartition 5 ou 6. Les canaux 8 et 8bis se prolongent dans la zone 5 vers le bord 10 opposé au bord 2, grâce à la chicane 11 prévue sur chaque face des plaques A et B.

Une plaque B comprend dans la zone 5 de répartition et à proximité du bord 10 un trou 12 traversant la plaque, un canal découvert 13, 13bis situé sur la face de la plaque comportant la zone d'échange 3, ledit canal étant relié au premier trou 12 et à un second trou 14 traversant la plaque, le trou 14 étant lui-même relié à un second canal découvert 15, 15bis situé sur l'autre face de la plaque, c'est-à-dire celle comportant la zone d'échange 3bis, ce second canal 15, 15bis étant sur le bord 10 de la plaque et débouchant à l'extérieur de cette dernière.

Vers l'autre extrémité, la plaque B comprend dans la zone de répartition 6 et à proximité du bord 2 un trou 16 traversant ladite plaque et elle comprend un canal découvert 17, 17bis sur la face de la plaque ayant la zone d'échange 3. Ledit canal découvert 17, 17bis est relié à un second trou 18 traversant la plaque, ce second trou 18 étant relié à un canal découvert 19 traversant le bord 10 de la plaque et situé sur la face de la plaque opposée à celle contenant le canal découvert 17, 17bis.

Une plaque B comporte deux bords 20 et 21 vers ses extrémités longitudinales, les bords 20, 21, 2 et 10 correspondant sensiblement à l'épaisseur de la plaque. Les canaux 13, 13bis–15, 15bis–17, 17bis et 19 de même que les trous 14 et 18 se trouvent dans la plaque B à des endroits où l'épaisseur correspond à celle des bords 2, 10, 20 et 21. D'autre part la membrane 1 retournée autour du bord 2 de la palque B recouvre les canaux 8, 8bis et 9, 9bis ainsi que les bords 20, 21, 10. Avantageusement, comme cela est mieux représenté fig. 4, une plaque B comprend une petite surépaisseur continue sur chaque bord 2, 10, 20 et 21, cette surépaisseur appelée «godron» ou «grain d'orge» par le technicien, ayant pour but d'assurer une meilleure étanchéité des éléments membranes et plaques en contact lors de l'empilement. Dans la fig. 4 cette petite surépaisseur est représentée par la ligne discontinue 22. Une telle surépaisseur n'est en général prévue que sur une face des bords de la plaque. Pour une simplification de représentation cette ligne 22 n'a pas été représentée sur la plaque B de la fig. 2.

Une plaque A comprend sensiblement toutes les caractéristiques de la plaque B décrite ci-avant. Une plaque A comprend ainsi dans la zone de répartition 5 et à proximité du bord 10 un trou 12 traversant ladite plaque et un canal découvert 13, 13bis situé sur la face de la plaque comportant la zone d'échange 3bis, c'est-à-dire sur la face inférieure de la plaque A représentée fig. 3. Ce canal 13, 13bis est relié au premier trou 12 et à un second trou 14 traversant la plaque, ce trou 14 étant lui-même relié à un second canal découvert 15, 15bis situé sur l'autre face de la plaque, c'est-à-dire sur la face comportant la zone d'échange 3.

Vers l'autre extrémité, la plaque A comprend dans la zone de répartition 6 et à proximité du bord 2, un trou 16 traversant ladite plaque et elle comprend un canal découvert 17, 17bis sur la face de la plaque ayant la zone d'échange 3bis ou face inférieure. Ce canal découvert 17, 17bis est relié à un second trou 18 traversant la plaque, ce second trou 18 étant relié à un canal découvert 19 traversant le bord 10 de la plaque situé sur la face supérieure de la plaque, c'est-à-dire sur la face opposée à celle contenant le canal découvert 17, 17bis.

Une plaque A comporte également deux bords 20 et 21 vers ses extrémités longitudinales, les bords 2, 10, 20 et 21 correspondant sensiblement à l'épaisseur de la plaque. Les canaux 13, 13bis–15, 15bis–17, 17bis et 19 de même que les trous 14 et 18 se trouvent dans la plaque A à des endroits où l'épaisseur correspond à celle des bords 2, 10, 20 et 21. D'autre part le membrane 1 retournée autour du bord 2 de la plaque A recouvre les canaux 8, 8bis et 9, 9bis ainsi que les bords 20, 21 et 10. Avantageusement, comme pour la plaque B décrite précédemment, une plaque A comporte une petite surépaisseur continue sur chaque bord 2, 10, 20 et 21 pour assurer une meilleure étanchéité de l'empilement de plaques et de membranes, cette surépaisseur étant représentée fig. 3 par une ligne discontinue 22. Pour une simplification de représentation cette ligne 22 n'a pas été représentée sur la plaque A de la fig. 1.

Ainsi comme cela ressort de la description ci-avant, dans un appareil selon la présente invention, l'empilement alterné des plaques A et B est tel que les canaux découverts 8, 8bis–9, 9bis–15, 15bis–13, 13bis–17, 17bis et 19 d'une plaque A font face aux canaux découverts de la face B adjacente et vice versa et il en est avantageusement de même pour les trous 12, 14, 16 et 18. D'autre part comme cela ressort nettement des figs 3 et 4, dans un appareil selon la présente invention deux plaques A et B successives sont en contact [par l'intermédiaire des membranes 1] aux endroits correspodant au dos des faces ayant les canaux 13, 13bis–15, 15bis–17, 17bis et 19.

La circulation des fluides dans un appareil comprenant un empilement alterné de plaques A et B et des membranes 1 se fait de la façon suivante, en adoptant par convention que le sens de circulation ou fluide [sang] circulant entre les membranes 1 est représenté par des flèches pleines, tandis que le sens de circulation du fluide [dialysat] circulant entre les faces des plaques et les membranes 1 est représenté par des flèches en pointillé. En se référant aux figs 3 et 4 le sang pénètre dans l'empilement alterné de plaques A et B par les canaux 8, 8bis et il passe entre les membranes se faisant face de deux plaques successives. Une fois arrivé vers l'extrémité des chicanes 11, en contact par l'intermédiaire des membranes 1, le sang se répartit dans les zones 5 dites de répartition et il traverse les zones 3, 3bis des plaques A et B se faisant face. Le sang atteint les zones de répartition 6 et il sort de l'empilement par les canaux 9, 9bis se faisant face des deux plaques successives en ayant constamment circulé entre les membranes 1. On voit ainsi, que grâce aux chicanes 11, on peut considérer que les entrées et sorties du sang sont disposées en diagonale, d'où il résulte que tous les filets de sang circulant entre les membranes 1 ont sensiblement la même longueur de parcours à effectuer lors de leur passage sur les faces 3, 3bis d'échange, car la perte de charge est la même pour tous les parcours empruntés par le sang. Cette uniformité de l'écoulement a pour effet d'améliorer notablement la qualité des transferts de matière entre le sang et le liquide de dialyse. Le liquide de dialyse [ou bain de dialyse, ou dialysat] pénètre dans la plaque A [voir fig. 3] par le canal 19 et arrive au trou 18. Ce liquide passe alors par le canal 17, 17bis situé sur l'autre face de la plaque et arrive au trou 16 où il se divise sur chaque face de la plaque dans les zones de répartition 6. Le liquide de dialyse circule ensuite entre les zones d'échange 3 et 3bis sur chaque face de la plaque, entre la membrane 1 et la face considérée. Il atteint les zones de répartition 5 et les deux parties de ce liquide se réunissent dans le trou 12 pour passer dans le canal 13, 13bis, atteindre le trou 14 et sortir de la plaque par le canal 15, 15bis. Le liquide de dialyse circule au contact des faces de la plaque B en passant par les canaux et trous ayant les mêmes chiffres de référence que ceux de la plaque A. Dans l'appareil selon les figs 1 à 4, du fait du positionnement des trous 12 et 16 des plaques A et B, on peut considérer que les entrées et sorties du liquide de dialyse sont disposées en diagonale sur chaque plaque.

Il doit être signalé que dans l'empilement alterné de plaques A et B précédemment décrites chaque canal découvert peut en fait comprendre plusieurs canaux parallèles entre eux comme cela est représenté sur les plaques A et B des figs 3 et 4. D'autre part dans un empilement de plaques A et B précédemment décrits, il n'est pas impératif que les canaux découverts 15, 15bis et 19 débouchent sur la tranche du bord 10 opposé à celui 2 par lequel pénètre le sang. Ainsi ces canaux peuvent déboucher sur les bords 20 et 21 et même sur le bord 2, dans la partie non comprise sous la membrane 1. En ce qui concerne la forme des canaux découverts celle-ci peut évidemment être très vairée. A titre d'exemples non limitatifs, la section de tels canaux peut ainsi avoir la forme d'un demi-cercle, d'une demi-ellipse, en plus de la forme en U [en auge] précédemment décrite. Il doit cependant être bien compris que par l'expression «canal découvert» on désigne un canal qui forme une rainure sur une face de la plaque A ou B considérée, une telle rainure étant cependant recouverte par une membrane 1 dans l'empilement de plaques A et B de l'appareil. Dans un appareil tel que celui précédemment décrit les plaques A et B peuvent ne pas comporter de chicanes 11 notamment dans le mesure où les plaques sont relativement longues par rapport à leur largeur. En outre un appareil selon la présente invention peut comprendre des plaques A et B dont les zones de distribution 5 et 6 sont disposées parallèlement aux bords 2 et 10 des plaques représentées figs 1 à 4, les fluides circulant alors sur les plaques sur la plus petite longueur de la zone d'échange.

Il est de plus important de préciser que dans un appareil selon la présente invention une plaque A peut présenter une symétrie par rapport à un plan médian perpendiculaire au bord 2 recouvert par une membrane et que dans ce cas chaque plaque B de l'empilement peut être considérée comme une plaque A ayant subi un retournement de 180 degrés autour d'un axe médian perpendiculaire au bord 2 recouvert par la membrane 1. Ainsi les plaques A et B de l'empilement peuvent être obtenues avec le même moule.

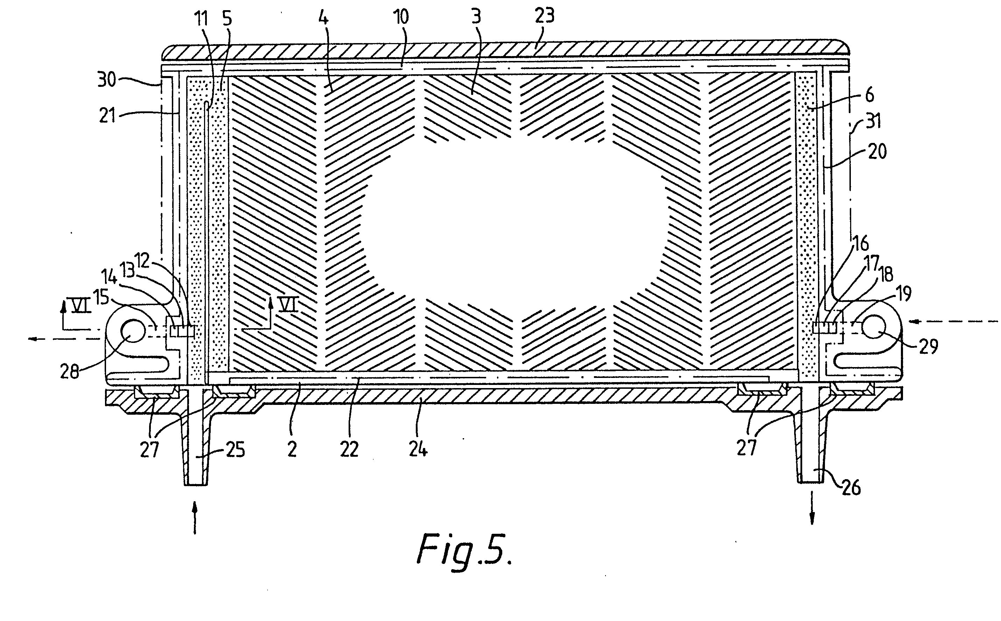

Un autre mode de réalisation d'un appareil selon la présente invention est représenté figs 5 à 9. La fig. 5 représente plus précisément une plaque B dans un appareil, la plaque elle-même n'étant pas représentée en coupe tandis que les plaques latérales 23 et 24 du dispositif de contention le sont. Une de ces plaques latérales, celle représentée en 24, comprend une tubulure 25 pour l'introduction du fluide circulant entre les membranes [sang] et une tubulure 26 pour l'évacuation du même fluide après qu'il ait circulé dans la zone d'échange 3 des plaques A et B de l'empilement. Pour une facilité de représentation les tubulures 25 et 26 ont été représentées dans un même plan de coupe, mais elles peuvent être dans des plans différents. Pour assurer l'étanchéité entre la plaque latérale 24 comportant les tubulures 25 et 26 et le bord 2 des plaques A et B comprenant les canaux découverts 8, 8bis et 9, 9bis, des dispositifs 27 connus sont prévus à ces endroits.

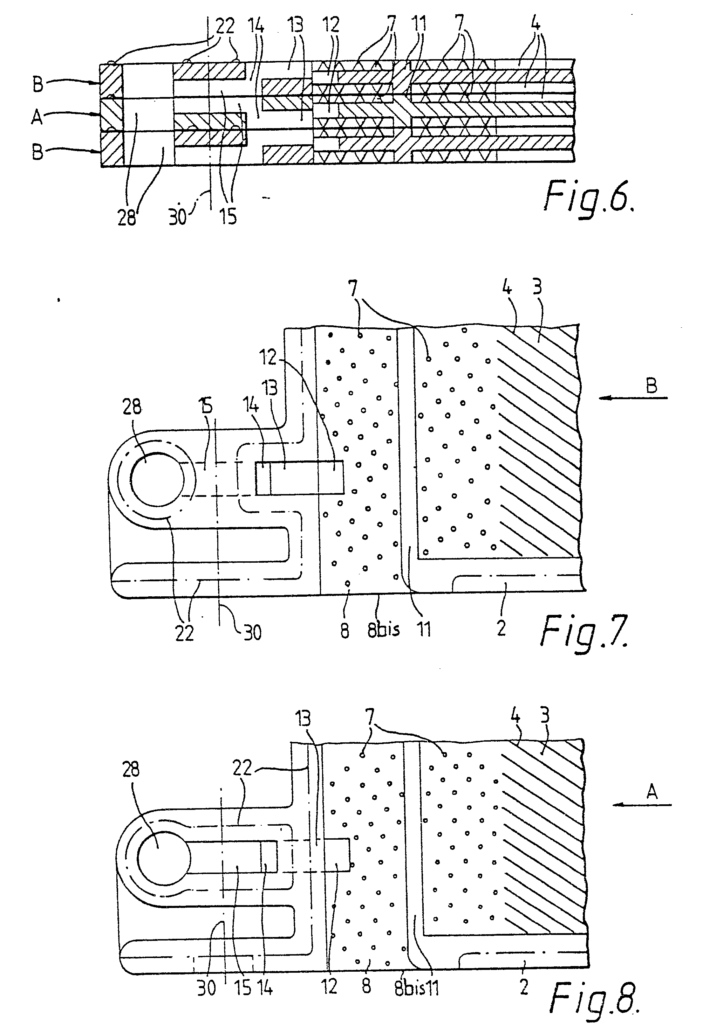

Comme l'appareil précédemment décrit, cet appareil résulte de l'empilement alterné de plaques A et B. La fig. 6 représente en coupe partielle un tel empilement. Les plaques A et B de cet appareil présentent toutes les caractéristiques structurelles de l'appareil selon les figs 1 à 4 et ainsi les mêmes chiffres de référence ont été conservés pour les désigner. La principale différence de l'appareil selon les figs 5 à 9 réside dans le fait que les canaux 15 et 19 de chaque plaque A et B ne débouchent pas sur la tranche du bord 10, [comme c'est le cas pour l'appareil selon les figs 1 à 4], mais dans des passages 28 et 29 traversant les plaques sur les bords 21 et 20. Ainsi dans l'empilement, les passages 28 et 29, non recouverts par les membranes 1, forment des canalisations internes pour la circulation du fluide [liquide de dialyse] circulant sur les faces des plaques A et B.

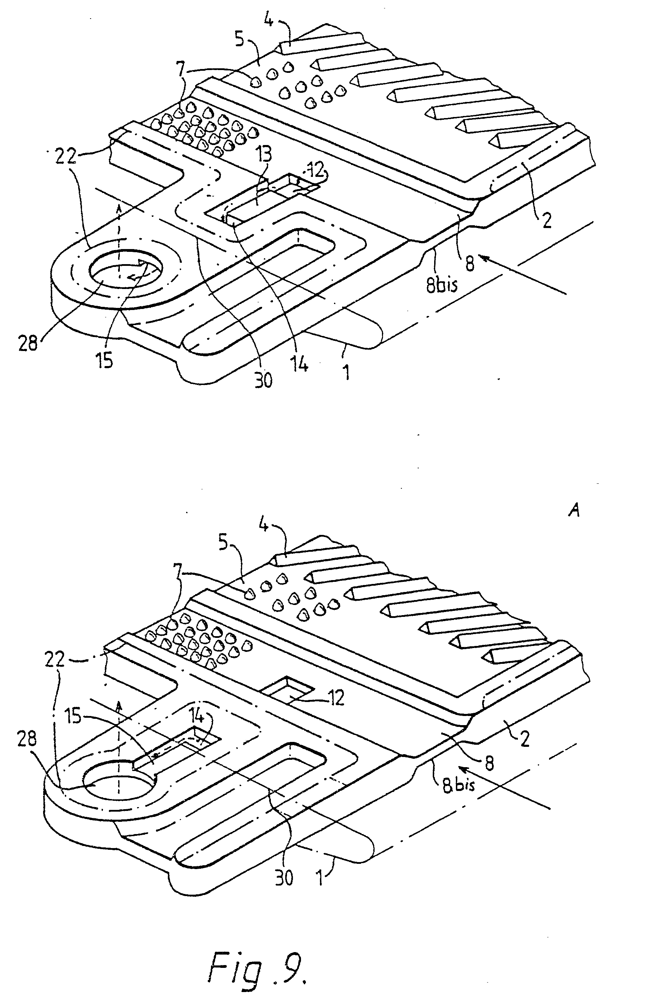

La fig. 9 montre en perspective et partiellement le positionnement des canaux découverts 8, 8bis, 13 et 15 sur chaque plasque A et B, ainsi que le passage 28 traversant les plaques. Les membranes ont été représentées transparentes et chaque plaque A et B comprend une membrane sur chacune de ses faces, chaque membrane étant retournée contre le bord 2 de chaque plaque. La position de chaque membrane 1 sur chaque bord latéral 20 et 21 des plaques A et B est elle que ces côtés (30) et 31 se trouvent sur les canaux 15 et 19.

Dans un appareil tel que celui décrit ci-avant et se rapportant aux figs 5 à 9, le sang entre dans l'appareil par la tubulure 25 et en sort par la tubulure 26 après avoir circulé entre les membranes 1 des plaques consécutives A et B de la même façon que dans l'appareil selon les figs 1 à 4. Le liquide de dialyse quant à lui pénètre dans l'appareil par une tubulure [non représentée] débouchant dans le passage 29 de chaque plaque, passe dans le canal 19, le trou 18, le canal 17 et dans le trou 16 de chaque plaque, circule au contact des faces des plaques A et B, passe dans le trou 12, le canal 13, le trou 14, le canal 15, le passage 28 de chaque plaque et sort de l'empilement par une tubulure [non représentée] en communication avec les passages 28 de chaque plaque.

Comme cela a été dit au sujet de l'appareil selon les figs 1 à 4, les plaques de l'appareil selon les figs 5 à 9 peuvent éventuellement ne pas comporter de chicane 11, notamment dans le cas où leur longueur est nettement plus grande que leur largeur. En outre, comme cela a été dit pour l'appareil selon les figs 1 à 4, dans l'appareil selon les figs 5 à 9 chaque plaque A peut présenter une symétrie par rapport à un plan médian perpendiculaire au bord 2 recouvert par une membrane 1 et dans ce cas chaque plaque B de l'empilement peut être considérée comme une plaque A ayant subi un retournement de 180 degrés autour d'un axe médian perpendiculaire au bord 2 recouvert par une membrane 1.

Il est à noter d'autre part que dans l'appareil selon les figs 5 à 9, les membranes 1 peuvent éventuellement recouvrir les passages 28 et 29 au moment du montage de l'empilement et qu'elles sont alors trouées dans ces passages ultérieurement. Il est avantageux dans ce cas, pour ne pas perdre trop de membrane, de prévoir des passages 28 et 29 très proches des bords 20 et 21.

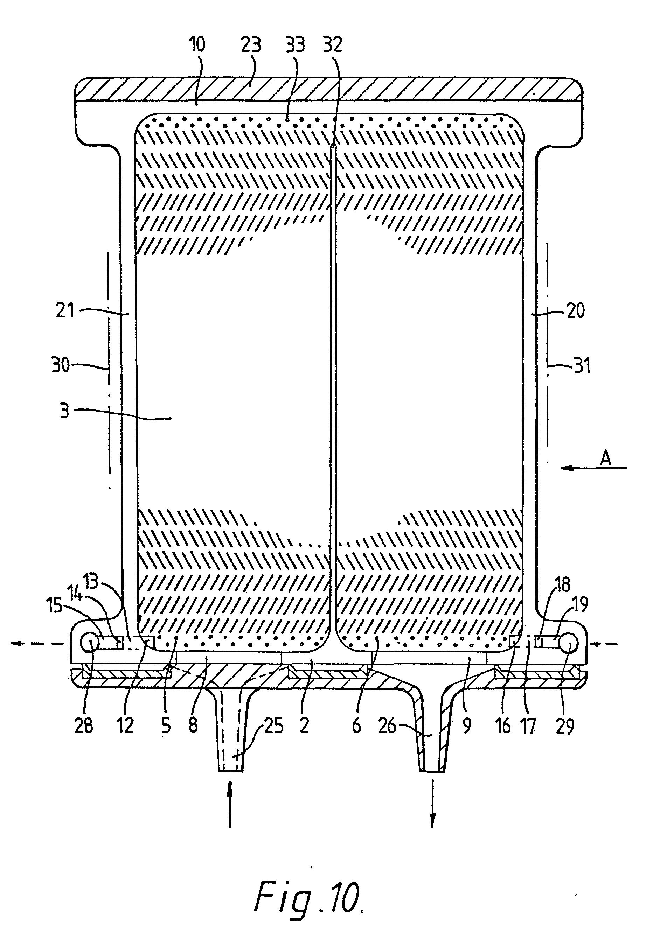

La fig. 10 représente une variante de réalisation de l'appareil selon les figs 5 à 9 dans lequel les plaques A et B comprennent sur chacune de leurs faces une chicane médiane 32, ceci permettant aux fluides [sang et liquide de dialyse] d'avoir un trajet plus long, ce trajet ayant sensiblement la forme d'un U, lesdites plaques comprenant de plus une zone de répartition 33 le long de leur bord 10. Dans la fig. 10 seule une plaque A est représentée, non en coupe, tandis que les plaques latérales 23 et 24 du dispositif de contention sont représentées en coupe, cette dernière passant par la tubulure 26 d'évacuation du sang ayant circulé au contact des membranes 1. Comme on peut le voir sur cette figure [10] la tubulure 25 d'introduction du sang est plus basse par rapport au plan contenant la tubulure 26. Dans cet appareil se retrouvent toutes les caractéristiques de l'appareil représenté figs 5 à 9 et de ce fait les mêmes chiffres de référence. Comme dans l'appareil selon les figs 5 à 9, les bords 30 et 31 des membranes ne recouvrent pas les passages 28 et 19 et se trouvent sur les canaux 15 et 19. Une plaque B [non représentée] a les mêmes caractéristiques structurelles qu'une plaque A avec la seule différence provenant du fait que les canaux découverts 13, 15, 17 et 19 sont sur la face opposée à celle où sont ces canaux sur la plaque A.

Ainsi le sang entre dans l'appareil par la tubulure 25, se répartit entre les membranes de deux plaques A et B dans la zone 5 dite de répartition après avoir passé par les canaux découverts 8 et 8bis, circule entre les membranes 1 dans les zones d'échange 3, 3bis comprises entre les bords 21 et les chicanes 32, atteint les zones de répartition 33 et circule dans les zones d'échange 3, 3bis comprises entre les chicanes 32 et les bords 20, atteint les zones de répartition 6, passe dans les canaux 9, 9bis et sort de l'appareil par la tubulure 26.

Le liquide de dialyse pénètre dans l'appareil par une tubulure [non représentée] débouchant dans les passages 29 de chaque plaque A et B, puis il passe dans les canaux 19, dans les trous 18, dans les canaux 17, les trous 16, dans la zone 6 de répartition, sur les faces des plaques en suivant un trajet en U après avoir passé dans la zone de répartition 33, atteint les zones de répartition 5, passe par le trou 12, les canaux 13, les trous 14, les canaux 15 et arrive dans le passage 28 de chaque plaque formant dans l'empilement une canalisation reliée à une tubulure non représentée d'évacuation de ce fluide. Il est à noter que dans l'appareil tel que représenté fig. 10, chaque plaque A présente une symétrie par rapport à un plan médian perpendiculaire au bord 2 recouvert par une membrane 1 et que de ce fait, dans l'empilement, une plaque B peut être considérée comme une plaque A ayant subi un retournement de 180 degrés autour de son axe médian perpendiculaire au bord 2 recouvert par une membrane 1. D'autre part, les membranes 1 peuvent éventuellement recouvrir les passages 28 et 29 au moment du montage de l'empilement et elles sont alors trouées ultérieurement pour permettre la distribution dans l'appareil du fluide circulant au contact des zones 3, 3bis d'échange et/ou de séparation de chaque plaque.

Les appareils selon la présente invention peuvent être réalisés avec des plaques A et B dont l'épaisseur est très faible, de l'ordre du demi-millimètre, ce qui fait que de tels appareils, qui ne comprennent dans leur empilement que des plaques et des membranes, présentent une grande surface par unité de volume. D'autre part de tels appareils sont extrêmement faciles à assembler, ce qui en facilite l'automatisation de montage et permet d'obtenir de grandes cadences de fabrication. En effet on opère généralement en montant simultanément deux empilements l'un à côté de l'autre, les plaques A et B de chaque empilement ayant leurs canaux découverts 8, 8bis et 9, 9bis respectivement à droite pour l'empilement de droite et à gauche pour l'empilement de gauche, les deux empilements étant vus en bout de plaques, par le bord (21) par exemple. Il suffit ensuite de couper la membrane entre les deux empilements, c'est-à-dire à proximité des bords 10 adjacents. Pour réaliser simultanément les deux empilements on se sert d'un dispositif connu permettant au rouleau de membrane utilisée d'avoir un mouvement de va-et-vient pour obtenir un pliage accordéon. Pour chaque passage de la membrane sur la largeur des empilements, vus en bout par le bord 21 par exemple, on dispose une plaque sur un empilement au mouvement aller et une plaque sur l'autre empilement au mouvement retour.

Bien que les appareils décrits ci-avant aient été présentés essentiellement comme reins artificiels à hémodialyse, ils peuvent cependant avoir d'autres applications notamment comme poumon artificiel pour l'oxygénation du sang par des mélanges gazeux contenant de l'oxygène. Ils peuvent également à titre d'exemples être utilisés comme reins à ultrafiltration ou comme appareils de plasmaphérèse pour séparer le plasma du sang. Pour ces dernières applications concernant plus précisément la séparation d'un fluide en deux fractions, il n'est pas obligatoire que de tels appareils aient deux sorties pour la fraction du fluide initiale qui a traversé les membranes. Ainsi lorsque le sang circule entre les membranes et que l'on se sert de l'appareil comme ultrafiltre ou comme appareil de plasmaphérèse, il suffit que chaque plaque A et B n'ait qu'un ensemble constitué par exemple par un premier trou 12, un canal découvert 13, un second trou 14 et un second canal découvert 15, ce dernier débouchant sur la tranche d'un bord de la plaque ou étant en communication avec un passage 28; l'appareil n'a ainsi qu'une sortie pour le fluide circulant au contact des plaques.

**Revendications**

1. Appareil utilisable notamment comme rein artificiel comprenant un empilement de plaques ayant chacune une zone (3, 3bis) d'échange et/ou de séparation sur chacune de leurs faces superposées de l'empilement, chaque plaque étant entourée par une membrane (1) venant recouvrir chacune des faces superposées et se retournant sur un bord (2) de ladite plaque, ledit bord (2) comprenant deux groupes de canaux découverts (8, 8bis et 9, 9bis), les canaux de chaque groupe étant situés dos à dos sur une même plaque, un groupe (8, 8bis) étant prévu pour l'introduction et l'autre (9, 9bis) pour l'évacuation d'un premier fluide circulant entre les parties de membranes (1) se faisant face de deux plaques consécutives, caractérisé en ce que ledit empilement résulte essentiellement de l'alternance de deux types de plaques (A et B) et en ce que chaque plaque comprend de plus au moins un ensemble comportant pour la circulation d'un deuxième fluide au contact des faces superposées de chaque plaque dans les zones (3, 3bis) d'échange et/ou se séparation:

– un premier trou (12), traversant la plaque perpendiculairement à ses faces superposées, situé à proximité de la zone (3, 3bis) d'échange et/ou de séparation de ladite plaque dans une zone (5) dite de répartition sur chaque face superposée de la plaque,

– un premier canal découvert (13) situé sur une face superposée de la plaque, ledit canal découvert étant relié avec ledit premier trou (12) et avec

– un second trou (14), traversant la plaque perpendiculairement à ses faces superposées, relié à

– un second canal découvert (15) disposé sur la face superposée opposée à celle où se trouve le premier canal découvert (13) de la plaque considérée,

les trous (12 et 14) d'une plaque (A) coïncidant avec les trous (12 et 14) des plaques (B) adjacentes, tandis que les canaux (13, 15) découverts d'une plaque (A) font face aux canaux correspondants (13, 15) des plaques (B) adjacentes et vice versa.

2. Appareil selon la revendication 1, caractérisé en ce que chaque plaque (A et B) de l'empilement comprend de plus un second ensemble comportant pour la circulation du deuxième fluide au contact des faces superposées de chaque plaque dans les zones (3, 3bis) d'échange et/ou de séparation:

– un premier trou (16), traversant la plaque perpendiculairement à ses faces superposées, situé à proximité de la zone (3, 3bis) d'échange et/ou de séparation de ladite plaque dans une zone (6) dite de répartition sur chaque face superposée de la plaque,

– un premier canal découvert (17) situé sur une face superposée de la plaque, ledit canal découvert étant relié avec ledit premier trou (16) et avec

– un second trou (18), traversant la plaque perpendiculairement à ses faces superposées, relié à

– un second canal découvert (19) disposé sur la face superposée opposée à celle où se trouve le premier canal découvert (17) de la plaque considérée,

les trous (16 et 18) d'une plaque (A) coïncidant avec les trous (16 et 18) des plaques (B) adjacentes, tandis que les canaux (17, 19) découverts d'une plaque (A) font face aux canaux correspondants (17, 19) des plaques (B) adjacentes et vice versa.

3. Appareil selon la revendication 2, caractérisé en ce que les canaux découverts (15 et 19) débouchent sur la tranche d'au moins un des bords des plaques (A et B) de l'empilement.

4. Appareil selon la revendication 2, caractérisé en ce que les canaux découverts (15 et 19) débouchent dans des passages (28, 29) prévus sur le bord des plaques (A et B).

5. Appareil selon l'une quelconque des revendications précédentes, caractérisé en ce que chaque plaque (A et B) comprend sur chacune de ses faces superposées une chicane (11) se prolongeant vers le bord (10) opposé au bord (2), les chicanes (11) de deux plaques successives (A, B) étant en contact par l'intermédiaire des membranes (1).

6. Appareil selon l'une quelconque des revendications 1 à 4, caractérisé en ce que chaque plaque (A et B) comprend une zone de répartition (5) et une zone de répartition (6) séparées l'une de l'autre par une chicane médiane (32), les zones (5 et 6) étant toutes deux le long du bord (2) de chaque plaque (A et B) recouvert par une membrane (1).

7. Appareil selon l'une quelconque des revendications précédentes, caractérisé en ce que dans l'empilement les membranes (1) recouvrent les trous (12, 14, 16, 18) et les canaux découverts (13, 17) et en ce qu'elles recouvrent au moins partiellement les canaux découverts (15 et 19).

8. Appareil selon l'une quelconque des revendications précédentes, caractérisé en ce que les plaques (A et B) ont chacune une épaisseur maximale inférieure à 1,2 mm.

9. Appareil selon la revendication 8, caractérisé en ce que les plaques (A et B) ont une épaisseur de 0,5 mm environ.

10. Appareil selon l'une quelconque des revendications 1 à 4 et 6 à 9, caractérisé en ce que chaque plaque (A) de l'empilement présente une symétrie par rapport à un plan médian perpendiculaire au bord (2) recouvert par une membrane (1) et en ce que chaque plaque (B) de l'empilement est une plaque (A) ayant subi un retournement de 180 degrés autour d'un axe médian perpendiculaire au bord (2) recouvert par une membrane (1).

**Claims**

1. Apparatus which can be used in particular as an artificial kidney, comprising a stack of plates each of which has an exchange and/or separation zone (3, 3bis) on each of their faces which are superimposed in the stack, each plate being surrounded by a membrane (1) which serves to cover each of the superimposed faces and which is turned over one edge (2) of the said plate, the said edge (2) containing two groups of exposed channels (8, 8bis and 9, 9bis), the channels of each group being located back to back on one and the same plate, one group (8, 8bis) being provided for the introduction and the other (9, 9bis) for the removal of a first fluid which circulates between the membrane portions (1) which face each other in two consecutive plates, characterised in that the said stack results mainly from the alternation of two types of plates (A and B) and in that each plate includes, in addition, at least one assembly which incorporates, for the circulation of a second fluid in contact with the superimposed faces of each plate in the exchange and/or separation zones (3, 3bis):

– a first hole (12), passing through the plate perpendicularly to its superimposed faces and located close to the exchange and/or separation zone (3, 3bis) of the said plate in a so-called distribution zone (5) on each superimposed face of the plate,

– a first exposed channel (13) located on one superimposed face of the plate, the said exposed channel being connected with the first hole (12) and with

– a second hole (14), passing through the plate perpendicularly to its superimposed faces, connected to

– a second exposed channel (15) arranged on the superimposed face opposite to that on which the first exposed channel (13) of the plate in question is situated,

the holes (12 and 14) of one plate (A) coinciding with the holes (12 and 14) of the adjacent plates (B), while the exposed channels (13, 15) of one plate (A) face the corresponding channels (13, 15) of the adjacent plates (B) and vice versa.

2. Apparatus according to Claim 1, characterised in that each plate (A and B) of the stack includes in addition a second assembly which incorporates, for the circulation of the second fluid in contact with the superimposed faces of each plate in the exchange and/or separation zones (3, 3bis):

– a first hole (16), passing through the plate perpendicularly to its superimposed faces and located close to the exchange and/or separation zone (3, 3bis) of the said plate in a so-called distribution zone (6) on each superimposed face of the plate,

– a first exposed channel (17) located on one superimposed face of the plate, the said exposed channel being connected with the first hole (16) and with

– a second hole (18), passing through the plate perpendicularly to its superimposed faces, connected to

– a second exposed channel (19) arranged on the superimposed face opposite to that on which the first exposed channel (17) of the plate in question is situated,

the holes (16 and 18) of one plate (A) coinciding with the holes (16 and 18) of the adjacent plates (B), while the exposed channels (17, 19) of one plate (A) face the corresponding channels (17, 19) of the adjacent plates (B) and vice versa.

3. Apparatus according to Claim 2, characterised in that the exposed channels (15 and 19) open onto the side of at least one of the edges of the plates (A and B) of the stack.

4. Apparatus according to Claim 2, characterised in that the exposed channels (15 and 19) open into Passages (28, 29) provided on the edge of the plates (A and B).

5. Apparatus according to any one of the preceding claims, characterised in that each plate (A and B) includes, on each of its superimposed faces, a baffle (11) extending towards the edge (10) opposite to the edge (2), the baffles (11) of two successive plates (A, B) being in contact by way of the membranes (1).

6. Apparatus according to any one of Claims 1 to 4, characterised in that each plate (A and B) includes a distribution zone (5) and a distribution zone (6) separated from each other by a median baffle (32), the zones (5 and 6) both being along the edge (2) of each plate (A and B) covered by a membrane (1).

7. Apparatus according to any one of the preceding claims, characterised in that, in the stack, the membranes (1) cover the holes (12, 14, 16, 18) and the exposed channels (13, 17) and in that the membranes at least partially cover the exposed channels (15 and 19).

8. Apparatus according to any one of the preceding claims, characterised in that the plates (A and B) are each of maximum thickness less than 1.2 mm.

9. Apparatus according to Claim 8, characterised in that the plates (A and B) are approximately 0.5 mm thick.

10. Apparatus according to any one of Claims 1 to 4 and 6 to 9, characterised in that each plate (A) of the stack is symmetrical with respect to a median plane perpendicular to the edge (2) covered by a membrane (1), and in that each plate (B) of the stack is a plate (A) which has undergone rotation through 180° around a median axis perpendicular to the edge (2) covered by a membrane (1).

**Patentansprüche**

1. Vorrichtung verwendbar insbesondere als künstliche Niere, umfassend einen Stapel von Platten, welche jeweils eine Austausch- und/oder Trennzone (3, 3bis) auf jeder ihrer Flächen, die im Stapel übereinanderliegen, hat, wobei jede Platte von einer Membran (1) umgeben ist, die jede der übereinanderliegenden Flächen bedeckt und sich an einer Umrandung (2) dieser Platte umkehrt, wobei diese Umrandung (2) zwei Gruppen von offenen Rinnen (8, 8bis und 9, 9bis) umfasst, wobei die Rinnen jeder Gruppe Rücken an Rücken auf derselben Platte gelegen sind, wobei eine Gruppe (8, 8bis) für die Einführung und die andere (9, 9bis) für die Evakuierung eines ersten Fluids vorgesehen ist, das zwischen den Membranteilen (1) die zwei aufeinanderfolgenden Platten gegenüberliegen, zirkuliert, dadurch gekennzeichnet, dass dieser Stapel im wesentlichen von dem Wechsel der beiden Plattentypen (A und B) resultiert und dass jede Platte mehr oder weniger eine Einheit umfasst, die zur Zirkulierung eines zweiten Fluids im Kontakt der übereinanderliegenden Flächen jeder Platte in den Austausch- und/oder Trennzonen (3, 3bis) umfasst:

– eine erste Öffnung (12), welche die Platte senkrecht zu ihren aufeinanderliegenden Flächen quert, gelegen in der Nähe der Austausch- und/oder Trennzone (3, 3bis) dieser Platten in einer Zone (5), der sogenannten Verteilungszone auf jeder übereinandergeschichteten Fläche der Platte,

– eine erste offene Rinne (13), gelegen auf einer übereinandergeschichteten Fläche der Platte, wobei diese offene Rinne mit dieser ersten Öffnung (12) verbunden ist, und mit

– einer zweiten Öffnung (14), welche die Platte senkrecht zu ihren übereinandergeschichteten Flächen quert, verbunden mit

– einer zweiten offenen Rinne (15), angeordnet auf der übereinandergeschichteten Fläche gegenüberliegend derjenigen, wo sich die erste offene Rinne (13) der in Betracht gezogenen Platte befindet, wobei die Öffnungen (12 und 14) einer Platte (A) mit den Öffnungen (12 und 14) der benachbarten Platten (B) zur Deckung kommen, während die offenen Rinnen (13, 15) einer Platte (A) den entsprechenden Rinnen (13, 15) der benachbarten Platten (B) gegenüberliegen und umgekehrt.

2. Vorrichtung gemäss Anspruch 1, dadurch gekennzeichnet, dass jede Platte (A und B) der Stapelung ausserdem eine zweite Einheit umfasst, welche zur Zirkulation des zweiten Fluids im Kontakt der übereinanderliegenden Flächen jeder Platte in den Austausch- und/oder Trennzonen (3, 3bis) umfasst:

— eine erste Öffnung (16), welche die Platte senkrecht zu ihren übereinanderliegenden Flächen quert, gelegen in der Nähe der Austausch- und/oder Trennzone (3, 3bis) dieser Platte in einer sogenannten Verteilungszone (6) auf jeder übereinanderliegenden Fläche der Platte,

— eine erste offene Rinne (17), gelegen auf einer aufeinanderliegenden Fläche der Platte, wobei diese Rinne mit dieser ersten Öffnung (16) verbunden ist und mit

— einer zweiten Öffnung (18), welche die Platte senkrecht zu ihren aufeinanderliegenden Flächen quert, verbunden mit

— einer zweiten offenen Rinne (19), die auf der aufeinanderliegenden Fläche gegebenüber derjenigen, wo sich die erste offene Rinne (17) der in Betracht gezogenen Platte befindet, angeordnet ist,
wobei die Öffnungen (16 und 18) einer Platte (A) mit den Öffnungen (16 und 18) der benachbarten Platten (B) übereinstimmen, während die offenen Rinnen (17, 19) einer Platte (A) den entsprechenden Rinnen (17, 19) der benachbarten Platten (B) gegenüberliegen und umgekehrt.

3. Vorrichtung gemäss Anspruch 2, dadurch gekennzeichnet, dass die offenen Rinnen (15 und 19) auf den Rand wenigstens einer der Umrandungen bzw. Kanten der Platten (A und B) der Stapelung münden.

4. Vorrichtung gemäss Anspruch 2, dadurch gekennzeichnet, dass die offenen Rinnen (15 und 19) in Durchgänge (28, 29) münden, welche an der Umrandung der Platten (A und B) vorgesehen sind.

5. Vorrichtung gemäss einem der vorhergehenden Ansprüche, dadurch gekennzeichnet, dass jede Platte (A und B) auf jeder ihrer übereinanderliegenden Flächen eine Prallplatte (11) umfasst, welche sich gegen den Rand (10) gegenüber dem Rand (2) verlängert, wobei die Prallfläche (11) der zwei aufeinanderfolgenden Platten (A, B) über die Membranen (1) in Kontakt ist.

6. Vorrichtung gemäss einem der Ansprüche 1 bis 4, dadurch gekennzeichnet, dass jede Platte (A und B) eine Verteilungszone (5) und eine Verteilungszone (6) umfasst, die voneinander durch ein mittleres Prallblech (32) getrennt sind, wobei die Zonen (5 und 6) beide entlang der Umrandung (2) jeder Platte (A und B), die durch eine Membran (1) bedeckt ist, vorhanden sind.

7. Vorrichtung gemäss einem der vorhergehenden Ansprüche, dadurch gekennzeichnet, dass in der Stapelung die Membranen (1) die Öffnungen (12, 14, 16, 18) und die offenen Rinnen (13, 17) bedecken und dass sie wenigstens teilweise die offenen Rinnen (15 und 19) bedecken.

8. Vorrichtung gemäss einem der vorhergehenden Ansprüche, dadurch gekennzeichnet, dass die Platten (A und B) jede eine maximale Dicke unterhalb 1,2 mm haben.

9. Vorrichtung gemäss Anspruch 8, dadurch gekennzeichnet, dass die Platten (A und B) eine Dicke von etwa 0,5 mm haben.

10. Vorrichtung gemäss einem der Ansprüche 1 bis 4 und 6 bis 9, dadurch gekennzeichnet, dass jede Platte (A) der Stapelung eine Symmetrie in bezug auf eine mittlere, zur Umrandung (2), die durch eine Membran (1) bedeckt ist, senkrechte Ebene aufweist und dass jede Platte (B) der Stapelung eine Platte (A) ist, die einer Umdrehung um 180° um eine mittlere Achse, die zur Umrandung (2), die durch eine Membran (1) bedeckt ist, senkrecht ist, unterzogen wurde.

# Fig.1.

# Fig.2.

*Fig.3.*

0 053 084

Fig.4.

0 053 084

Fig.5.

0 053 084

17

*Fig.6.*

*Fig.7.*

*Fig.8.*

Fig .9.

Fig.10.